# EUROPÄISCHE PATENTANMELDUNG

(11) **EP 1 876 402 A2**
(43) Veröffentlichungstag der Anmeldung: **09.01.2008**
(21) Anmeldenummer: 06022713.9
(22) Anmeldetag: 31.10.2006
(51) Int. Cl.: F25B 30/02

(54) **Wärmepumpe mit einer Temperiereinrichtung**

(30) Priorität: 05.07.2006 DE 202006010412 U
(71) Anmelder: Kroll, Markus, 84329 Wurmannsquick (DE); Vetter, Andreas, 94094 Rotthalmünster (DE)
(72) Erfinder: Kroll, Markus, 84329 Wurmannsquick (DE); Vetter, Andreas, 94094 Rotthalmünster (DE)
(74) Vertreter: Appelt, Christian W.

(57) **Zusammenfassung**

Die Erfindung betrifft eine Temperiereinrichtung mit einem Kältemedium-Kreislauf, in dem in Reihenschaltung ein Verdichter, ein zur Wärmeabgabe bestimmter Kondensator, ein Expansionsventil und ein zur Wärmeaufnahme bestimmter Verdampfer angeordnet sind, wobei dem Verdampfer noch eine im Nebenschluß zum Expansionsventil geführte Zusatzeinspeiseleitung vorgeschaltet ist, die von der Eingangsseite des Expansionsventils abzweigt und in den Verdampfer einspeist.

## Beschreibung

Die Neuerung bezieht sich auf eine Temperiereinrichtung mit einem Kompressor-Kältemedium-Kreislauf, in dem in Reihenschaltung ein Verdichter, ein zur Wärmeabgabe bestimmter Kondensator, ein Expansionsventil und ein zur Wärmeaufnahme bestimmter Verdampfer angeordnet sind. Der Kondensator und der Verdampfer stellen Wärmetauscher dar, und der Kältemedium-Kreislauf nimmt Wärme auf einem ersten Temperaturniveau auf und gibt sie, unter Hinzunahme von Antriebsenergie, die im Verdichter umgesetzt wird, auf einem zweiten Temperaturniveau ab. Hierbei steht das Medium in einem Teil des Kreislaufs unter hohen Druck und in einem anderen Teil unter niedrigem Druck, außerdem ist es in einem Teil des Kreislaufs flüssig und in einem anderen Teil dampfförmig, in Übergangsbereichen kommen aber auch beide Phasen gleichzeitig vor.

Solche auf Wärmepumpenbasis arbeitende Temperiereinrichtungen, die Heizeinrichtungen, Kühleinrichtungen oder auch umschaltbar beides sein können, entnehmen die aufzunehmende Wärme je nach Bauart der Luft, einem Gewässer oder der Erde, wobei insbesondere bei Erd-Wärmepumpen wiederum unterschieden wird zwischen Direktverdampfungssystemen, die den wärmeaufnehmenden Verdampfer als Erdkollektor in Kontakt mit der die Wärme spendenden Erde haben, und indirekten Verdampfungssystemen, bei denen zwischen dem oberirdischen Verdampfer und dem Erdkollektor ein zweiter Wärmetransportkreis vorhanden ist, mit Sole oder einem Frostschutzmittel als Wärmetransportmedium. Systeme, die die Wärme der Luft entnehmen, benötigen in Abhängigkeit von den Temperatur- und Feuchtigkeitsbedingungen von Zeit zu Zeit eine Enteisung des Verdampfers, um dort keinen zu hohen Wärmeübergangswiderstand entstehen zu lassen. Bei Systemen, die die Wärme aus dem Wasser nehmen, muß vermieden werden, dass das Wasser um den Verdampfer einfriert.

Zur Erfüllung der unterschiedlichen Anforderungen sind durchaus komplexe Wärmepumpen-Kreisläufe bekannt geworden. So ist z.B. aus den DE 2946466 C2 und DE 29 54 402 C2 Heizeinrichtungen mit einem Kältemediumkreislauf bekannt, bei denen das den Verdichter verlassende erhitzte Medium zuerst einen ersten Wärmetauscher durchläuft, in dem ein Wärmepuffer für die Enteisungsphasen mit Wärme aufgepumpt wird, und das den Kondensator, der den Haupt-Wärmetauscher darstellt, verlassende Medium vor der Einspeisung in den Verdampfer einen dritten Wärmetauscher durchläuft, in dem es von dem anschließend den Verdampfer erwärmenden Luftstrom vorgekühlt wird. Aus der DE 3603037 A1 ist eine Klimaanlage des Motor-Wärmepumpentyps als sogenannte Split-Anlage bekannt, also mit getrennter Außeneinheit, die im Freien steht und einen Luft-Medium-Wärmetauscher umfasst, und Inneneinheit im zu heizenden oder zu kühlenden Raum mit einem Medium-Luft-Wärmetauscher, ferner mit einem Zusatz-Verdampferregister zur Verwertung der Abwärme des Antriebsmotors, mit zwei Expansionsventilen und mit einem Ölabscheider im Zug der Ausgangs-Kältemediumleitung des Verdichters, da sich bekanntlich im Verdichter das Kältemedium in nachteiliger Weise mit Maschinenöl anreichert.

Die Charakteristiken des Kältemediums, die Abhängigkeiten von Temperaturen und Drücken und die hieraus folgenden Steuerungsprobleme sowie die Wärmetransportverluste u.a. wegen turbulenter Strömungen im Kreislauf lassen jedoch noch weitere Verfeinerungen der Wärmepumpenanlage in der Temperiereinrichtung wünschenswert erscheinen. Hierzu bietet die Neuerung vorteilhafte neue Lösungen an.

Gemäß einem ersten Aspekt der Neuerung ist dem Verdampfer noch eine im Nebenschluß zum Expansionsventil geführte Zusatzeinspeiseleitung vorgeschaltet, die von einer Stelle vor der Eingangsseite des Expansionsventils abzweigt und in den Verdampfer einspeist. Diese Leitung kann durch eine Steuerungseinheit auf Durchlass oder Sperrung gesteuert werden. Sie wird dann auf Durchlass und somit auf die Veranlassung einer Zusatz-Kältemediumeinspritzung gesteuert, wenn aufgrund der äußeren Parameter das Expansionsventil in Abhängigkeit von der Druckdifferenz und der Temperatur des Kältemediums immer stärker drosselt und schließlich ganz sperrt, jedoch der Verdichter einen hohen Sog erzeugt und dann im Verdampfer ein Minimum-Durchsatz zur Verhinderung einer Vereisung nützlich wäre. Zur Verminderung der Turbulenz und damit der Strömungsverlust im Verdampfer ist es zu bevorzugen, dass im Zug der Zusatzseinspeiseleitung zur Druckentspannung ein Kapillarrohr eingesetzt ist, das unter den gegebenen Bedingungen aufgrund einer von ihm zuerst erzeugten laminaren Strömung, der dann eine laminar-turbulente Mischströmung folgt, günstiger ist als ein Drossel- oder Expansionsventil. Die beanspruchte Maßnahme ist insbesondere in Anlagen vorteilhaft einsetzbar, bei denen die Temperiereinrichtung eine Split-Einrichtung mit örtlich getrennten Außen- und Innenteilen ist und somit die Vereisungsgefahr hoch ist.

Nach einem zweiten Aspekt der Neuerung ist die Temperiereinrichtung dadurch gekennzeichnet, dass der Kondensator durch eine von seinem Ausgang bis zu seinem Eingang verlaufende, ein nur von diesem Ausgang zu diesem Eingang eine Strömung durchlassende Überbrükkungsleitung überbrückt ist, die in die Eingangsleitung des Kondensators mündet, die am Zusammenfluss als Saugrohr ausgebildet ist. Diese Überbrückungsleitung dient der Rückführung von noch in der Gasphase befindlichen Anteilen des Ausgangsstroms des Kondensators, die dann beim nächsten Durchgang durch den Kondensator kondensiert werden sollen. Diese Maßnahme ist insbesondere dann zweckmäßig, wenn das Kältemedium des Kältemedium-kreislaufs ein Mehrkomponenten-Kältemedium ist, beispielsweise ein mehrkomponentiger halogenisierter Fluorkohlenwasserstoff "HFKW" wie z. B. ein unter der Bezeichnung R-407C im Handel befindliches Mittel.

Nach einem dritten Aspekt der Neuerung umfasst für einen Kältemedium-Kreislauf, in dem der Verdampfer mit einem Gebläse zum Hindurchblasen von einem Wärmeentzug zu unterwerfender Luft versehen ist, der Kältemedium-Kreislauf einen ersten zusätzlichen Wärmetauscher, der zum Zweck der Wärmeabgabe in den Kältemedium-Strom zwischen dem Ausgang des Kondensators und dem Eingang des Verdampfers eingeschaltet ist und örtlich im Weg des Luftstroms zwischen dem Gebläse und dem Verdampfer angeordnet ist. Dieser erste zusätzliche Wärmetauscher gibt einen Teil der durch die Verdichtung und Verflüssigung des Mediums entstandenen Wärme gleich wieder an der Wärme-Eingangsseite ab, dieser Teil wird also im Kreis herum transportiert. Er ist aber insofern von Nutzen, als er beim Eintritt in den Verdampfer eine allzu kalte Luft, aus der noch Wärme herausgezogen werden soll, verhindert oder vorwärmt und dadurch einen günstigeren Arbeitspunkt für die Anlage und das Kältemedium schafft, was den Nachteil des nicht unmittelbar als Ausgangsergebnis zur Verfügung stehenden Wärmeanteils überwiegt. Gemäß einem als Erfindung beanspruchten Verfahren ist der erste zusätzliche Wärmetauscher dauernd, und also auch in der Abtauphase und nicht nur zur Heizphase (DE 2946466), gespeist.

Ein vierter Aspekt der Neuerung bezieht sich darauf, dass der Kältemedium-Kreislauf noch einen zweiten zusätzlichen Wärmetauscher umfasst, der zum Zweck der Wärmeabgabe in den Kältemedium-Strom zwischen dem Ausgang des Verdichters und einem vor dem Eingang des Kondensators eingeschalteten, den Kondensator im Abtaubetrieb vom Verdichterausgang trennenden Kreislaufumkehrventil so eingesetzt ist, dass er in beiden Kreislaufrichtungen in den Kältemedium-Kreislauf einbezogen ist. Dieser Wärmetauscher führt also zu einer Vor-Abkühlung des Mediums, er entlastet im Normalbetrieb das Kreislaufumkehrventil und verhindert im Fall des Umkehr-, nämlich Abtaubetriebs eine allzu hohe Temperatur des den Verdampfer in heißem Zustand erreichenden Mediums. Für den zweiten zusätzlichen Wärmetauscher kann ebenso wie es für den Kondensator beschrieben wurde eine Rückführleitung mit Rücksschlagventil geschaltet sein, die in diesem Fall gasförmige Medium-Anteile zurückführt. Ein Vorteil dieser Schaltung ist, dass der Verflüssigungsdruck um ca. 1,5 A 10⁵ sinkt, was die elektrische Leistungsaufnahme erniedrigt. Für den ersten und für den zweiten zusätzlichen Wärmetauscher ist es zum Zweck der gezielten Wärmeabgabe vorteilhaft, wenn einerseits der erste zusätzliche Wärmetauscher und der Verdampfer, bzw. andererseits der zweite zusätzliche Wärmetauscher und der Kondensator in Aneinanderlage in einem gemeinsamen Gehäuse angeordnet sind.

Nach einem fünften Aspekt der Neuerung ist in die Ausgangsleitung des Verdichters ein Ölabscheider eingeschaltet, mit einer von einer Ölsammelstelle im Ölabscheider abzweigenden Öl-Rückführleitung zum Verdichter, und ist in die Öl-Rückführleitung der wärmeentziehende Teil eines Wärmetauschers eingeschaltet, dessen wärmeabgebender Teil im zu heizenden Raum o. dgl. oder auch örtlich direkt oder indirekt im Weg des vom Gebläse des Verdampfers erzeugten Luftstroms vor dem Verdampfer angeordnet ist. Diese zusätzliche Wärmeentnahme ist besonders für Hochtemperatur-Wärmepumpen von Vorteil, bei denen die Rückspeisung von zu heißem Öl in den Verdichter zu Problemen führen würde. Nach einer speziellen Ausführungsform der Neuerung speist der mit seinem wärmeentziehenden Teil in die Öl-Rückführleitung eingeschaltete Wärmetauscher eine zweite Expansionseinrichtung und enthält der diese Teile enthaltende Zweig des Kältemedium-Kreislaufs einen zusätzlichen Verdampfer, z.B. in Form eines zusätzlichen Registers im Verdampferaggregat, so dass die einzelnen Teilströme sich nicht vor dem Verdampfer mischen.

Eine bevorzugte Ausführung sieht vor, dass zwischen dem Expansionsventil und dem Verdampfer eine Leitungsverzweigung in eine Mehrzahl von in Einspritzdüsen in den Verdampfer endenden Leitungen vorliegt und sowohl von einem Punkt zwischen dem Expansionsventil und der Leitungsverzweigung, als auch vom Volumen des Verdampfers je eine Kondensatabführleitung in Richtung zum Kondensator abzweigt, die jeweils ein in der Richtung zum Kondensator öffnendes Rückschlagventil enthalten, mit der weiterhin bevorzugten Konstruktion, dass sich die beiden Kondensatabführleitungen in Strömungsrichtung hinter den Rückschlagventilen vereinigen und von der zum Kondensator gerichteten vereinigten Leitung noch vor Erreichen des Kondensators eine Abführleitung zu einem Kältemedium-Vorratstank abzweigt. Der Sinn dieser neuerungsgemäßen Konstruktion liegt in der Eigenschaft der Rückschlagventile, abhängig von ihrer Größe bei niedrigerem oder bei höherem Druck zu öffnen. Andererseits muß das Rückschlagventil ausreichend groß sein, um im Abtaubetrieb das Kondensat vollständig abzuleiten. Schließen nun die Rückschlagventile wegen zu geringen Durchsatzes während des Abtauens, so tritt die sogenannte Niederdruckstörung auf, d.h. es besteht die Gefahr des Einfrierens des Kondensators. Durch die Verteilung des Kondensatflusses auf zwei Rückschlagventile kann nun das Ventilschließen verhindert werden, da es sich dann um kleinere Ventile handeln kann, die bei den auftretenden Drücken in ihrer Durchlassrichtung geöffnet bleiben.

Ein weiterer Aspekt, der als verfahrensmäßiger erfindungsgemäßer Aspekt bei einem auch im Abtaubetrieb betriebenen Wärmepumpenkreislauf beansprucht wird, betrifft das Vorgehen beim Abschalten der Anlage. Wird am Regler oder beispielsweise aufgrund einer thermostatischen Regelung durch den Regler der Wärmepupenbetrieb aus der Heizphase heraus abgeschaltet, so wird zunächst für eine gegebene Zeitspanne im Abtaubetrieb gefahren, wodurch die vorhandene Restwärme noch als Abtauwärme ausgenützt wird und die Anlage mit dem Abschalten gleich enteist wird, was als "latente Abtauung" bezeichnet werden kann. Die Dauer der noch zugegebenen Abtauphase hängt von der Größe und Konstruktion der Anlage ab und kann in der Größenordnung von 10 Sekunden betragen.
Weitere Einzelheiten, Vorteile und Weiterbildungen der Neuerung ergeben sich aus der folgenden Beschreibung bevorzugter Ausführungsbeispiele unter Bezugnahme auf die Zeichnung. Es zeigen:
Fig. 1 einen Übersichtsplan einer neuerungsgemäßen Temperiereinrichtung, nämlich einer Heizeinrichtung mit Entnahme der Wärme aus der Luft;
Fig. 2 den Plan von Fig. 1 mit zusätzlicher Darstellung des Mediumflusses in den verschiedenen Leitungen im Heizbetrieb;
Fig. 3 den Plan von Fig. 1 mit zusätzlicher Darstellung des Mediumflusses in den verschiedenen Leitungen im Abtaubetrieb;
Fig. 4 einen Übersichtsplan einer anderen neuerungsgemäßen Temperiereinrichtung, die einen Hochtemperatur-Wärmepumpenkreislauf verwendet;
Fig. 5 einen Übersichtsplan einer wiederum anderen neuerungsgemäßen Temperiereinrichtung, die mehrere verschiedene Wärmequellen verwendet;
Fig. 6 einen Übersichtsplan entsprechend Fig. 1 einer im Innenteil abgewandelten Ausführung.

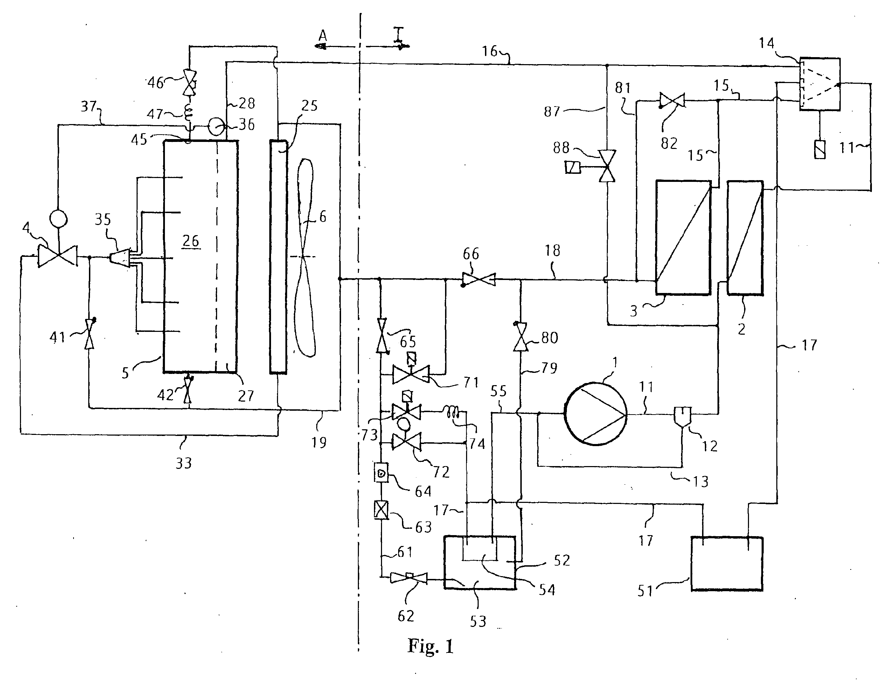

Die in Fig. 1 gezeigte Wärmepumpen-Heizeinrichtung besteht grundsätzlich aus einem Kreislauf eines Wärmetransportmittels, das auch als Kältemittel oder im folgenden als Kältemedium bezeichnet wird und durch Druck unter Wärmeabgabe verflüssigt und an anderer Stelle des Kreislaufs durch Druckentspannung unter Wärmeaufnahme verdampft wird. Solche Kältemedien können z.B. Frigene oder halogenierte Fluorkohlenwasserstoffe sein, auch Ammoniak ist als Kältemedium bekannt. Das Kältemedium muss hinsichtlich seines kritischen Drucks und seiner kritischen Temperatur im Arbeitsbereich der Anlage liegen, um durch Druck verflüssigt und durch Entspannung verdampft zu werden. Die in Fig. 1 dargestellte Temperiereinrichtung soll als Heizeinrichtung dienen; sie umfaßt einen die wärmeabgebenden Teile enthaltenden Innenteil I, der sich im Innenraum befindet, und einen die wärmeaufnehmenden Teile umfassenden Außenteil A, der sich außerhalb des Hauses befindet. In Fig. 1 sind die Teile I und A durch eine dünne strichpunktierte Linie getrennt. In einzelnen umfasst der Kreislauf von Fig. 1 im Innenteil I einen Verdichter 1 für das dampfförmige Kältemedium, einen dem Verdichter im Kreislauf nachgeschalteten ersten Platten-Wärmetauscher 2 und sodann einen im Heizkreislauf folgenden zweiten Platten-Wärmetauscher, der als Kondensator 3 wirkt; und im Außenteil A ein Expansionsventil 4, das den vom Verdichter 1 aufgebauten Mediendruck auf einen für die Verdampfung geeigneten niedrigeren Druck reduziert, und einen Luft-Kältemedium-Wärmetauscher in Form eines Verdampfers 5, der die zum Wärmeentzug herangezogene Luft von einem Lüfter 6 geliefert bekommt. Das entspannte, verdampfte und aufgrund seiner Dampfform eine angehobene Enthalpie aufweisende Kältemedium wird zum Verdichter zurückgesaugt. Der Lüfter ist hier am Luftströmungseingang des Aggregats dargestellt, in vielen Fällen ist er jedoch als Saug-Lüfter am Luftströmungsausgang montiert.

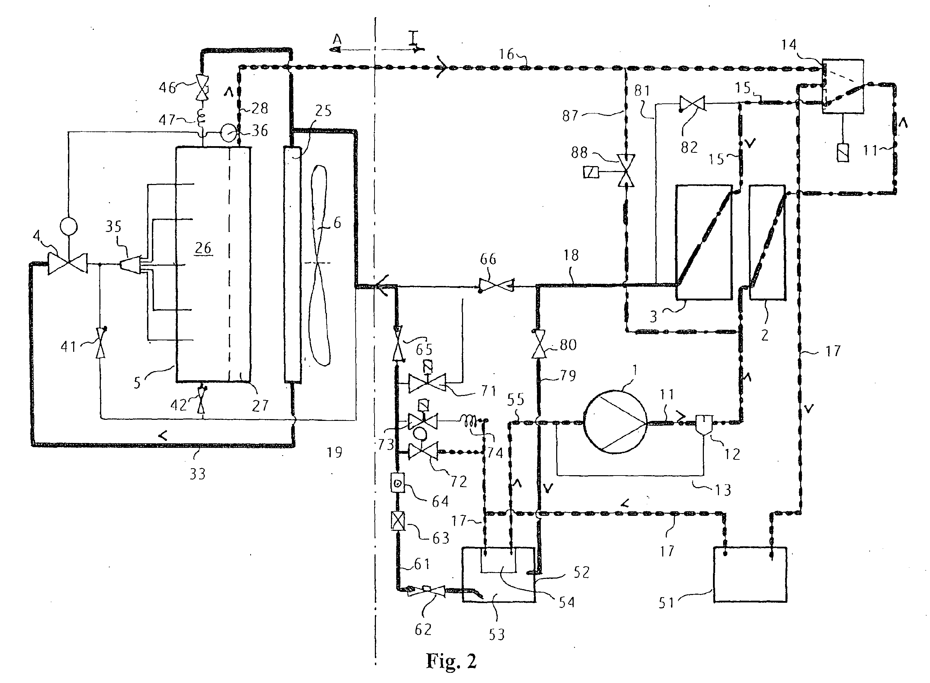

Noch mehr im einzelnen dargestellt, verlässt das Medium den Verdichter 1 über eine Druckleitung 11, in deren Verlauf sich ein Ölabscheider 12 befindet, der im Verdichter in das Kältemedium gemischtes Maschinenöl, das im Kreislauf eine problematische Komponente wäre, absondert und es über eine Ölrückführleitung 13 dem Verdichter zurückliefert, indem er es dem gasförmigen Eingangsmedium des Verdichters beigibt. Die Druckleitung 11 mündet sodann in den ersten Platten-Wärmetauscher 2, der einen Teil der durch die Verdichtung und Verflüssigung dem Kältemedium mitgegebenen Wärme sofort als Nutzwärme abgibt, und verläuft weiter zu einem Kreislaufumkehrventil 14, das als Magnetventil steuerbar ist und Vierwege-Umschaltungen erlaubt. An das Ventil 14 schließen vier Leitungen an, nämlich die Druckleitung 11, eine Ventil-Ausgangsleitung 15, eine vom Außenteil A kommende bzw. zum Außenteil A führende Leitung 16 und eine über Zwischenglieder zum Verdichter 1 zurückführende Saugleitung 17. Im normalen Heizbetrieb (Fig. 2) steht das Ventil 14 so, dass die Druckleitung 11 mit der zum Kondensator 3 führenden Leitung 15, und die Leitung 16 mit der Saugleitung 17 verbunden ist. Am Ausgang des Kondensators 3 schließt eine Leitung 18 an, die in eine Leitung 19 übergeht, die als zweite Kältemediumleitung, neben der Leitung 16, die Teile I und A miteinander verbindet.

Das gesamte Aggregat des Verdampfers 5 umfasst ein Vorwärmregister 25, ein Verdampfer-Hauptregister 26 und ein Saug-Sammelrohr 27, die im Heizbetrieb vom Medium in dieser Reihenfolge durchflossen werden. Das Hauptregister 26 und das Saug-Sammelrohr 27 bilden zusammen ein gemeinsames Bauteil. Vom Sammelrohr 27 führt als Ausgang eine Leitung 28 zur Leitung 16, die im Heizbetrieb schließlich wieder die Verbindung zum Verdichter 1 herstellt. In an sich bekannter und in der Zeichnung nicht dargestellter Weise kann zwischen den Leitungen 16, 28 einerseits und dem Expansionsventil 4 andererseits noch eine Leitung für den äußeren Druckausgleich eingeschaltet sein. Eine solche Leitung wird installiert, wenn das Expanionsventil thermostatisch geregelt ist und zwischen den Teilen I und A eine lange Leitung verlegt ist. Der Druckausgleich verhindert ein zu schnelles Schließen des Expansionsventils.

Zwischen dem Vorwärmregister 25 und dem Hauptregister 26 verläuft eine Leitung 33, die in das Expansionsventil 4 mündet, dem ein Venturi 35 nachgeschaltet ist, mit mehreren Ausgangsleitungen, die jeweils an einer Einspritzdüse in das Hauptregister 26 münden. Das Expansionsventil 4 stellt ein Drosselventil dar, das den vom Verdichter 1 aufgebauten Druck des nach wie vor gasförmigen Mediums auf eine niedrige Druckstufe herabsetzt. Das Expansionsventil ist stetig oder feinstufig steuerbar und wird in Abhängigkeit von der Druckdifferenz zwischen seinem Eingang und seinem Ausgang und in Abhängigkeit von der Temperatur des Mediums am Ausgang des Verdampfers gesteuert. Hierfür steht ihm ein Temperaturfühler 36 zur Verfügung, der die Temperatur in der Leitung 28 misst und ein entsprechendes Signal oder eine entsprechende Antriebsspannung über eine elektrische Leitung 37 an den Ansteuermotor des Expansionsventils 4 sendet. Das Vorwärmregister 25 wird also noch von flüssigem hei-βem Kältemedium unter hohem Druck durchflossen, während in das Hauptregister 26 zunächst noch flüssiges und warmes, aber schon unter niedrigem Druck stehendes Medium eintritt, das dann unter Abkühlung verdampft und der das Register umspülenden Luft Wärme entzieht. Diese Luft ist vom Lüfter 6 zunächst durch des Vorwärmregister 25 geblasen und dabei etwas angewärmt worden, und gibt diese Wärme im Hauptregister 26 wieder an das dort verdampfende Medium ab. Diese Vorerwärmung erweist sich dann als sehr nützlich, wenn im kalten Winter die Vorlauftemperatur der Luft bereits sehr niedrig ist, so dass ohne die Vorerwärmung ein für die Verdampfung des Mediums ungünstiger Arbeitspunkt vorliegen und eine beschleunigte Vereisung des Hauptregisters 26 drohen würde.

Zwischen dem Expansionsventil 4 und dem Venturi 35 zweigt eine ein Rückschlagventil 41 enthaltende Leitung, und aus dem Hauptregister 26 zweigt eine ein Rückschlagventil 42 enthaltende Leitung ab, die zum Eingang des Vorwärmregisters 25 zurückführen. Diese Leitungen sind im normalen Heizbetrieb aufgrund der Rückschlagventile und der Druckverhältnisse gesperrt.

Das Verdampfer-Hauptregister 26 weist noch eine weitere Zusatz-Einspritzdüse 45 auf, die über ein als Kugelhahn ausgebildetes schaltbares Ventil 46 und ein Kapillarrohr 47 mit dem Eingang des Vorwärmregisters 25 verbunden ist. Mit Hilfe dieser Elemente kann in das Hauptregister 26 durch Schalten des Ventils 46 eine Zusatz-Einspritzung unternommen werden, die einen Minimum-Mediendurchsatz aufrechterhält, wenn das Expansionsventil 4 sperrt. Die Bedeutung dieser Maßnahme wird später erläutert.

Der Verdichter 1 ist ein reiner Gas-Verdichter, und wenn er eingangsseitig auch flüssige Teilchen ansaugt, gibt es Schläge und Störungen bis hin zu anlageschädigendem Flüssigkeitsdruck. Beim dargestellten Beispiel ist der Verdichter ein Scrollverdichter. Im Innenteil I der Anlage ist insofern in die zum Verdichter 1 hin gerichtete Saugleitung 17 ein Flüssigkeitsabscheider 51 einbezogen, an dessen Ausgang nur noch dampfförmiges Medium abgesaugt wird. Die Leitung 17 mündet nach Verlassen des Abscheiders 51 in einen Zwischenbehälter 52, der seinerseits zwei Behälter umfasst, nämlich einen ersten Vorratstank 53, der als Ausgleichsbehälter und Wärmetauscher dient, und einen zweiten Vorratstank 54, aus dem eine Saugleitung 55 zum Verdichter 1 führt. Im unteren Bereich des Zwischenbehälters 52, also in dessen "Sumpf', in dem sich nochmal Flüssigkeit abscheiden kann, setzt eine Flüssigkeits-Abführleitung 61 an, die über ein schaltbares Ventil 62, einen Filtertrockner 63, ein Schauglas 64 und ein einen Rückfluß aus der Leitung 19 verhinderndes Rückschlagventil 65 in die Leitung 19 einmündet, und zwar in einem Bereich zwischen dem Ausgang zum Außenteil A und einem die Leitungen 18 und 19 voneinander trennenden, nur im Abtaubetrieb diese Leitungen miteinander verbindenden Rückschlagventil 66. Das Ventil 62 ist ständig geöffnet und wird nur für Zwecke der Wartung und Reparatur der Anlage geschlossen.

Das Rückschlagventil 65 ist bei der dargestellten Ausführungsform durch ein Magnetventil 71 überbrückbar. Zwischen die Leitungen 17 und 61 sind weiterhin in der dargestellten Installationsweise ein stetig oder feinstufig steuerbares Ventil 72 und, parallel zum Ventil 72, die Reihenschaltung eines Magnetventils 73 und eines Kapillarrohrs 74 eingeschaltet. Ein weiterer Leitungszweig mit einer Leitung 79 und einem Rückschlagventil 80 erstreckt sich zwischen dem ersten Vorratstank 53 und der Leitung 18 am Eingang des Verdichters 1. Das Rückschlagventil 80 ist so eingesetzt, dass im Abtaubetrieb des Verdichters dessen erzeugter Sog das Öffnen des Ventils 80 verhindert, während im Heizbetrieb das Kondensat vom Kondensator 3 abfließen kann.

Eine weitere Leitungsrückführung betrifft den Kondensator 3. Zwischen dessen Eingang an der Leitung 15 und seinem Ausgang an der Leitung 18 verläuft eine Rückführleitung 81 für noch gasförmiges Medium, und in diese Leitung ist ein Rückschlagventil 82 so eingesetzt, dass nur eine Rückleitung, nicht aber eine Umgehung des Kondensators 3 möglich ist. Diese Rückleitung wird als Heißgasumspülung bezeichnet.

Zwischen den Leitungen 16 und 11 ist noch eine Überbrückungsleitung 87 gezogen, in die ein Magnetventil 88 einbezogen ist. Das Magnetventil 88 kann durch eine Steuerung geöffnet und geschlossen werden, was in später beschriebenen Arbeitsphasen erfolgt.

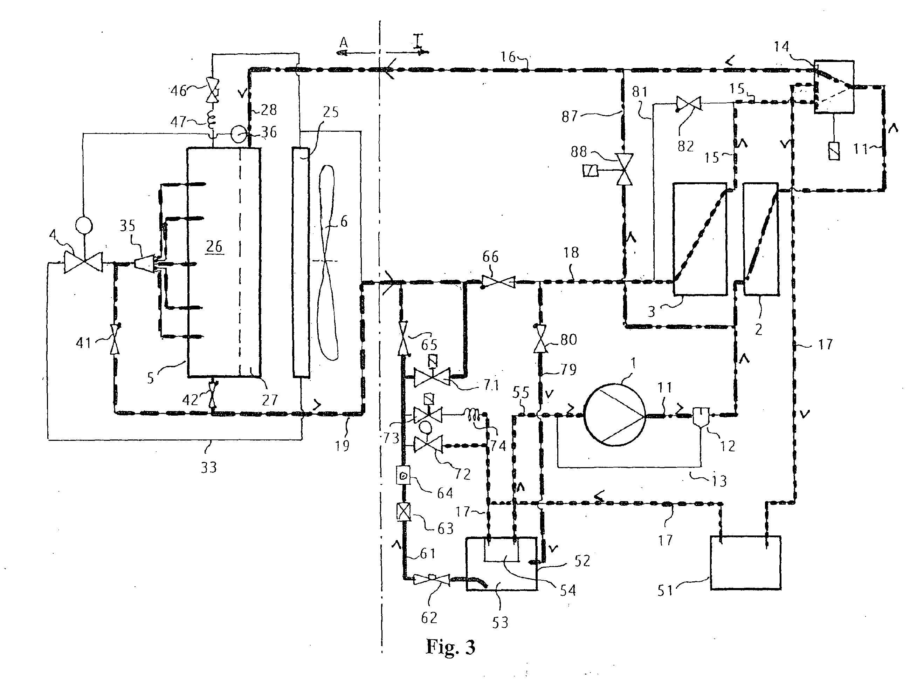

Die beschriebene Anlage nach Fig. 1 arbeitet folgendermaßen:
Die Fig.n 2 und 3 veranschaulichen die Mediumströme in den verschiedenen Leitungen und Elementen im Normalbetrieb, nämlich im in Fig. 2 dargestellten Heizbetrieb und in der in Fig. 3 dargestellten Abtau- oder Enteisungsphase. Diese Abtau- oder Enteisungsphase ist von Zeit zu Zeit durchzuführen und wird durch eine (nicht dargestellte) Steuerung ausgelöst, die Signale von verschiedenen Sensoren empfängt, insbesondere Druck- und Temperatursignale, eventuell auch Signale von einem direkten Eis-Fühler. Das Medium in der Anlage steht teils unter hohem und teils unter niedrigem Druck und ist teils flüssig und teils dampfförmig, wobei hinsichtlich des Aggregatzustands auch Mischzustände auftreten können. In den Fig.n 2 und 3, die als Grundplan den Schaltungsplan von Fig. 1 verwenden, ist die in den einzelnen Leitungsteilen stattfindende Mediumströmung folgendermaßen dargestellt: flüssiges Medium ist durch eine durchgezogenen dicke Linie gekennzeichnet, Kondensat - flüssig mit Dampfanteilen - ist dick gestrichelt dargestellt, unter Druck stehender Dampf ist dick strichpunktiert dargestellt und unter Sog stehender Dampf ist dick gepunktet dargestellt. Die Strömungsrichtung in den einzelnen Leitungen ist durch Pfeilspitzen auf oder neben der Leitung markiert.

Im normalen Heizbetrieb gemäß Fig. 2 ist das Kreislaufumkehrventil 14 so gestellt, dass einerseits die Leitungen 11 und 15 und andererseits die Leitungen 16 und 17 miteinander verbunden sind. Der komprimierte Dampf vom Verdichter 1 durchströmt die Leitung 11, wobei er zuerst im Ölabscheider 12 von Maschinenöl gereinigt wird und dann den Plattenwärmetauscher 2 durchsetzt, wodurch er eine erste Abkühlung erfährt, und kommt dann über den Umschalter 14 und die Leitung 15 zum Kondensator 3, der der zweite Plattenwärmetauscher ist und in dem der Dampf so stark abgekühlt wird, dass er kondensiert und zumindest überwiegend als flüssiges Medium in der Leitung 18 und durch die Leitungn 79 und 61 zum Außenteil A weiterfließt.

Soweit das den Kondensator 3 verlassende Medium noch Dampfanteile enthält, werden diese durch die "Heißgasumspülung" über die Rückführleitung 81 und das Rückschlagventil 82 in die Kondensator-Eingangsleitung 15 zurückgebracht. Diese Dampfanteile können dadurch verursacht sein, dass viele handelsübliche Kältemedien Mehrkomponentenstoffe sind, so besteht beispielsweise das unter der Bezeichnung R-407C im Handel erhältliche Kältemedium aus drei Grundstoffen mit unterschiedlichen Siedepukten. Wenn nicht alle Grundstoffe vollständig kondensiert worden sind, tritt am Kondensator-Ausgang eine Zweiphasenströmung auf, aus der die Gasphase - in bereits abgekühltem Zustand - ausgeleitet und über die Leitung 81 zum Kondensatoreingang zurückgeführt wird, damit sie beim nächsten Durchgang nach erneuter Wärmeabgabe vollständig kondensiert.

In den Außenteil A der Anlage gerät also über die Leitung 18 und weiterhin über die Leitung 79 mit dem Ventil 80, den Zwischenbehälter 53 und die Leitung 61 das abgekühlte flüssige Medium, nach wie vor im wesentlichen unter dem hohen Verdichter-Ausgangsdruck, der nur aufgrund der Durchflusswiderstände der verschiedenen durchströmten Elemente leicht abgenommen hat. Im Außenteil durchströmt es zunächst das Vorwärmregister 25, in dem es von seiner Restwärme einen wesentlichen Teil an den vom Lüfter 6 erzeugten, in der Zeichnung von rechts nach links fließenden Luftstrom abgibt und hierdurch selbst nochmal heruntergekühlt wird. Sodann durchsetzt das Medium das Expansionsventil 4, das es vom hohen Druck auf den niedrigen Druck entspannt, und wird über das Venturi 35 auf fünf in den Verdampfer 5 mündende Einspritzdüsen verteilt. Das Venturi bewirkt eine gleichmäßige Verteilung der Mediumeinspritzung. Das druckentspannte Medium, dessen kritische Temperatur und kritischer Druck niedriger liegen als die vorliegenden Werte, verdampft im Verdampfer 5 und entnimmt dabei dem es umspülenden Luftstrom Wärme, die den Energiesprung zum Dampfzustand bewirkt, einschließlich der zuvor dem Luftstrom vom Vorwärmregister eingespeisten Wärme. Durch den leicht angewärmten Luftstrom und den leicht vorgekühlten Mediumstrom kann mit größerer Sicherheit ein mediumspezifischer Arbeitspunkt mit besserem Wirkungsgrad und sicherer vollständiger Verdampfung erreicht werden.

Vom Verdampfer-Hauptregister 26 gerät das verdampfte Medium in das Saug-Sammelrohr 27 des Verdampfers und wird von diesem über die Saugleitung 16, das Umkehrventil 14, die Leitung 17, die Vorratstanks 51 und 54 und die Saugleitung 55 in den Verdichter zurückgesaugt, wobei im Flüssigkeitsabscheider 51 und im Zwischenbehälter 52 Flüssiganteile, die nicht zum Verdichter kommen sollen, ausgefiltert werden.

Von Zeit zu Zeit müssen die Register des Verdampfers abgetaut werden, was dadurch geschieht, dass der im Heizbetrieb als Wärmesenke wirkende Verdampfer als Wärmequelle eingesetzt wird. Die Abtauung wird beim Luft-Wärmetauscher durch Fühler im Verdampfer befohlen. Hierzu wird, wie Fig. 3 zeigt, das Kreislaufumkehrventil 14 so gestellt, dass einerseits die Leitungen 11 und 16 und andererseits die Leitungen 15 und 17 miteinander verbunden werden, und wird der Betrieb des Verdichters 1 für eine Umschaltzeit in der Größenordnung von 30 bis 45 Sekunden unterbrochen, während derer das Restgas ausgeschoben wird. In manchen Fällen genügt diese Zeit schon für das Abtauen, andernfalls schaltet der Verdichter nach seiner Unterbrechungszeit wieder ein und das vom Verdichter kommende heiße gasförmige Medium fließt parallel einerseits, zunächst wie auch beim Heizbetrieb, unter erster Vorabkühlung durch den ersten Plattenwärmetauscher 2 und das Umkehrventil 14 und andererseits unter Umgehung des Wärmetauschers 2 und des Umkehrventils 14 über die Leitung 87 und das Magnetventil 88 in die - im Heizbetrieb als Saugleitung, jetzt als Druckleitung betriebene - Leitung 16. Das Magnetventil 88 wird pulsierend geöffnet und geschlossen, wobei durch das Tastverhältnis das Maß der Wärmeabgabe im Wärmetauscher 2 und damit die Temperatur des zur Abtauung verwendeten Mediums bestimmt werden kann. Von der Leitung 16 aus wird das Medium im Außenteil A über das Sammelrohr in den Verdampfer eingespeist und wird dort durch Abkühlung weitgehend kondensiert. Es verlässt den Verdampfer 5 zu etwa einem Viertel über das Rückschlagventil 41 und zu etwa drei Vierteln über das Rückschlagventil 42 und die Leitung 19 und kommt nun zum Ventil 66, das in dieser Phase als Expansionsventil wirkt und den Druck des Mediums herabsetzt. Wäre nur das Ventil 41, nicht aber das Ventil 42 vorhanden, so wäre im Verdampfer 3 ein Druckstau zu befürchten. Das das Ventil 66 verlassende Medium enthält Kondensat mit einem Flüssigkeitsanteil, der nicht über die Leitung 79 zum Vorratstank 53 geleitet wird, da das Rückschlagventil 80 sperrt, sondern einschließlich dem Dampfanteil unter niedrigem Druck über die Leitung 18 zum jetzt rückwärts durchflossenen Kondensator 3 und die Leitungen 15, 17 und 55 in den Verdichter 1 gesaugt wird.

Hierbei wird auch im ersten Vorratstank 53 angesammelte Flüssigkeit über das Ventil 62 und die Leitung 61 in den Kreislauf zurückgeführt. Die Ansaugung der Flüssigkeit erfolgt durch den Sog in der Leitung 17, wobei bei geöffnetem Magnetventil 73 eine Vergasung durch das Kapillarrohr 74 erfolgt. Die Flüssigkeit kann aber auch über das Rückschlagventil 65 oder, wenn es geöffnet wird, über das Magnetventil 71 zur Leitung 19 geleitet werden, wo sie dem vom Verdampfer 5 zurückströmenden Kondensatstrom beigemischt wird. Das Magnetventil 71 hat den Zweck, bei langen Anbindeleitungen etwa ab 10 m beim Einschalten der Abtauphase sofort Kondensat aus dem Vorrat vom Behälter 52 zu liefern, das dem "Kondensator" 3 - im Abtaubetrieb als Verdampfer wirkend - zur Verfügung steht und einen Niederdruck mit Einfriergefahr verhindert, bis schließlich das Kondensat vom "Verdampfer" 5 - jetzt als Kondensator wirkend - in den Elementen des Innenteils I zu fließen beginnt.

Das Vorwärmregister 2 ist sowohl im Heizbetrieb als auch im Abtaubetrieb in den Kreislauf eingeschaltet. Da es mit dem Kondensator 3 zusammengebaut ist, bewirkt es im Abtaubetrieb eine Erwärmung des Kondensators und damit eine Erwärmung des darin fließenden Medienstroms, in dem hierdurch noch vorhandene Flüssigkeitsreste weitgehend verdampft werden. Neben den beschriebenen Arbeitsphasen, nämlich dem Heizbetrieb und dem Abtaubetrieb, sind noch der Betrieb unter Extrembedingungen und Umschalt- und Übergangsphasen zu untersuchen.

Ist bei einer Luft-Wärmepumpe die Luft, der die Wärme zu entziehen ist, allzu kalt, so dass das Kältemedium nicht mehr ausreichend verdampft, so wird als erste Abhilfe der Lüfter 6 auf eine höhere Drehzahl gesteuert, um größere Luftmassen dem Wärmeentzug unterziehen zu können; genügt diese Maßnahme nicht, so muss zum Aufrechterhalten der Heizleistung im Puffer eine z.B. elektrische Zusatzheizung eingeschaltet werden.

Beim Umschalten vom Heizbetrieb auf den Abtaubetrieb oder umgekehrt werden aus Druckleitungen Saugleitungen und aus Saugleitungen Druckleitungen. Die Unterbrechung des Verdichterbetriebs läßt der Anlage etwas Zeit, die Drücke in den Leitungen und Elementen über das Umkehrventil 14 zu entspannen.

Eine besondere Situation tritt bei Situationen auf, bei denen sich die vom Sensor 36 oder von einer elektrischen Steuerung, der/die das Expansionsventil 4 steuert, gemessene Temperatur spontan ändert. Dies ist z.B. der Fall, wenn bei einer Haushalts-Heizanlage vom Brauchwasser-Erhitzungsbetrieb auf den Heizbetrieb umgeschaltet wird. Der Betrieb des Expansionsventils wird in Abhängigkeit von der Druckdifferenz und der Temperatur gesteuert, es schließt bei kaltem Rücklauf und öffnet bei warmem Rücklauf. In der Praxis sieht das so aus, dass der Druck eines Thermo-Dehnvolumens auf eine Membran wirkt, die die Ventilnadel des Expansionsventils verstellt. Soll nun ein abgekühlter Brauchwasservorrat durch entsprechende Umschaltung erhitzt werden, so kommt kalter Rücklauf aus dem Boiler mit der Folge, dass der Druck nachlässt und das Expansionsventil 4 zu schließen beginnt, obwohl der Betriebszustand ein sich stärker öffnendes Expansionsventil erfordern würde. Das Schließen des Expansionsventils bei gleichzeitig ansteigender Verdichterleistung führt zu einer Fehlanpassung, einer Disharmonie zwischen diesen Elementen, es findet eine zu starke Absaugung statt, das Kältemedium verdampft bei immer niedrigeren Temperaturen, die hierdurch noch niedriger werden, und schließlich kommt es schon bei einer Außentemperatur von +10° zur Vakuumbildung bei Verdampfungstemperaturen bis -35°, eine Erscheinung, die als "Niederdruckstörung" bekannt ist. Hier setzt nun die Zusatzeinspritzung über das Kapillarrohr 47 ein, die bei Bedarf eingeschaltet wird und dann eine Umgehung des Expansionsventils bewirkt, so dass, auch wenn dieses stark drosselt, ein ausreichender Durchsatz des Mediums durch den Verdampfer aufrechterhalten wird. Die Verwendung des nicht der Steuerung des Expansionsventils unterworfenen Kapillarrohrs 47 hat - etwa im Gegensatz zu einem an dessen Stelle verwendeten zweiten Expansionsventil - den Vorteil einer im wesentlichen laminaren Strömung im Verdampfer, mit der Folge eines besseren Wärmeübergangs. Nach erfolgter Normalisierung der Parameter kann die Zusatzeinspritzung wieder ausgeschaltet werden und das Expansionsventil 4 wieder den gesamten Mediumstrom durch den Verdampfer 5 übernehmen.

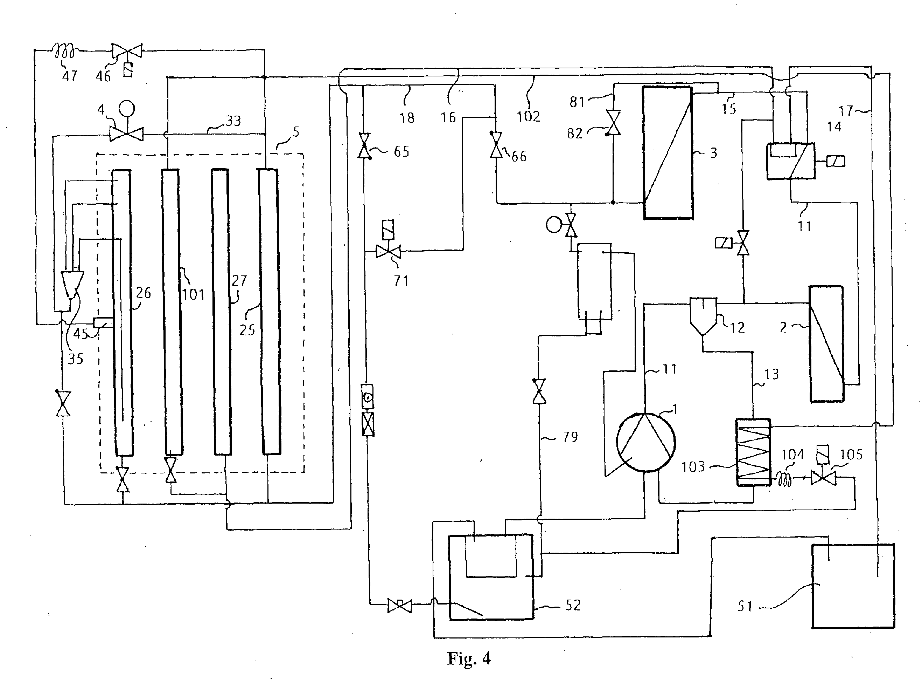

Fig. 4 veranschaulicht als anderes Beispiel für die Neuerung in schematischer Darstellung eine Temperiereinrichtung mit einer Hochtemperatur-Wärmepumpe. An wesentlichen Änderungen gegenüber der Anlage von Fig.n 1 bis 3 sind ein zusätzliches Register 101 im Verdampfer-Aggregat, und eine Wärme-Rückgewinnung aus dem Maschinenöl des Verdichters 1 zu nennen.

Das zusätzliche Register 101 kann beispielsweise Solarwärme, Abwärme von Maschinen o. dgl. mit ausnützen. Das im Register 101 angewärmte Medium wird wie das in den anderen Registern behandelte Medium über die Saugleitung 16 dampfförmig dem Verdichter 1 zugeführt.

Außerdem wird, wie erwähnt, die Abwärme des Verdichters, soweit sie dem vom Ölabscheider 12 abgesonderten Maschinenöl innewohnt, mit Hilfe eines über die Leitung 79, die vom ersten Vorratstank 52 kommt, mit Medium gespeisten Wärmetauschers 103 gewonnen. Die Leitung 102 zweigt am - im Heizbetrieb - Ausgang des Vorwärmregisters 25 ab. Am Medieneingang des Wärmetauschers 103 befinden sich ein Kapillarrohr 104 und ein zweites Expansionsventil 105. Der Ausgang des Wärmetauschers 103 verläuft über eine Leitung 102 zum Außenteil A, wo es beim dargestellten Beispiel dem zusätzlichen Register 101 eingespeist wird.

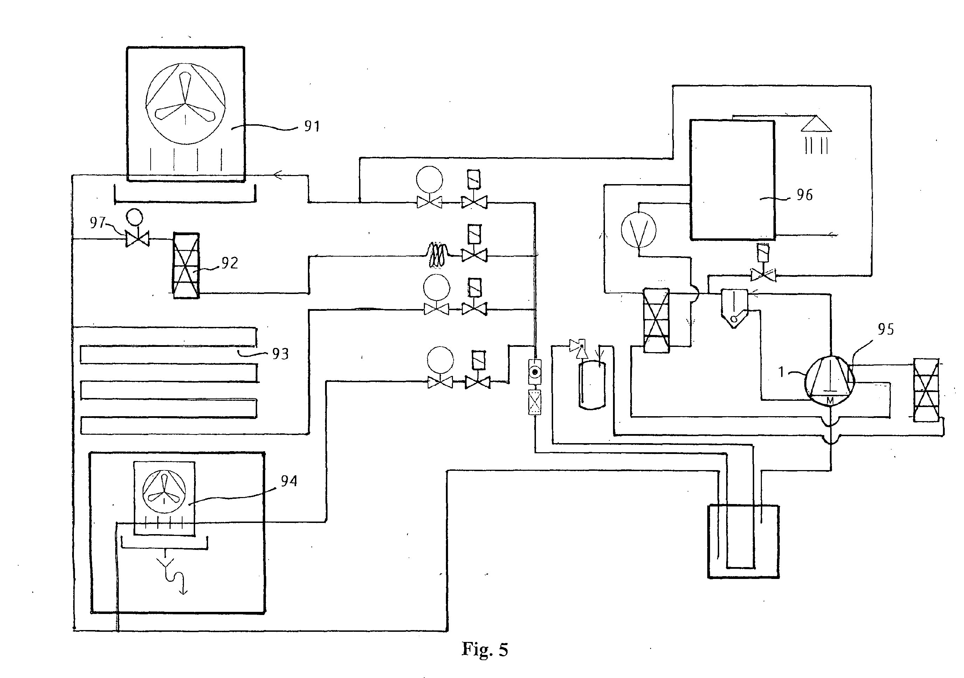

In den Fig.n 1 bis 4 wurden als Beispiele Heizeinrichtungen beschrieben, die die Wärmeenergie aus der Luft nehmen. Fig. 5 zeigt schematisch eine Anlage, die die Möglichkeit bietet, vier verschiedene Wärmequellen zu nutzen. Die entsprechenden Wärmequellenaggregate sind ein Umluftkühlungskollektor 91 wie bei Fig. 1, ein Heizungsrücklaufkollektor 92, ein Erdkollektor 93 und die Wärmeabgabeseite 94 eines Kühlschranks. Soweit der Verdichter 1 eine Ölwanne hat, wird mittels einer Leitungsschlange 95 in der Ölwanne auch die Verdichter-Abwärme ausgenützt. Ein Brauchwasserboiler 96 kann, außer seiner Aufgabe der Heißwasser-Bereitstellung, auch als Wärmepuffer für die Abtauung mitverwendet werden. Im Kreis des Heizungsrücklaufkollektors ist noch ein Verdampfungsdruck-Regler 97 eingesetzt, der dann der Reduzierung des Drucks dient, wenn die Vorlauftemperatur zu hoch ist. Im übrigen enthält die Anlage von Fig. 4 Elemente, die auch in der Anlage von Fig. 1 vorhanden und dort beschrieben wurden, und hat einen für den Fachmann aus der Zeichnung erkennbaren Aufbau.

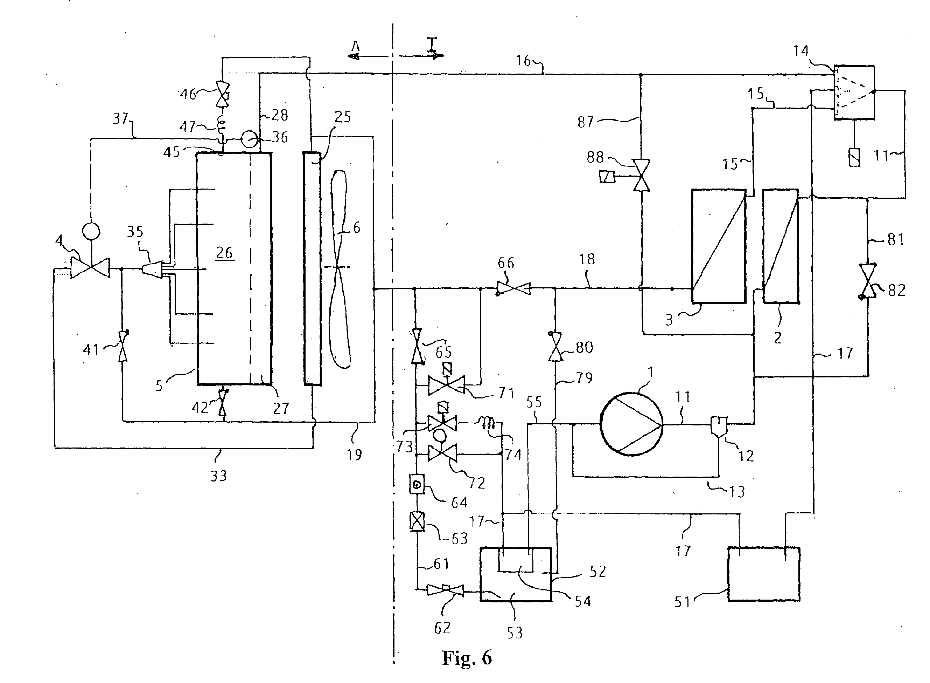

Fig. 6 zeigt eine Luft-Luft-Wärmepumpen-Heizeinrichtung vergleichbar der von Fig. 1, jedoch ist hier die "Heißgasumspülung" nicht am Kondensator 3, sondern am zusätzlichen Wärmetauscher 2 angebracht. Nach einer weiterhin abgewandelte Ausführung kann diese Maßnahme auch an beiden Wärmetauschern, der Kondensator 3 und dem zusätzlichen Wärmetauscher 2, vorgesehen sein.

## Patentansprüche

1. Temperiereinrichtung mit einem Kältemedium-Kreislauf, in dem in Reihenschaltung ein Verdichter (1), ein zur Wärmeabgabe bestimmter Kondensator (3), ein Expansionsventil (4) und ein zur Wärmeaufnahme bestimmter Verdampfer (5) angeordnet sind,
**dadurch gekennzeichnet, dass** dem Verdampfer (5) noch eine im Nebenschluß zum Expansionsventil geführte Zusatzeinspeiseleitung (45,46,47) vorgeschaltet ist, die von der Eingangsseite des Expansionsventils abzweigt und in den Verdampfer (5) einspeist.

2. Temperiereinrichtung nach Anspruch 1, **dadurch gekennzeichnet, dass** im Zug der Zusatzseinspeiseleitung zur Druckentspannung ein Kapillarrohr (47) eingesetzt ist.

3. Temperiereinrichtung nach Anspruch 1 oder 2, **dadurch gekennzeichnet, dass** die mit der Zusatzeinspeiseleitung (45,46,47) versehene Temperiereinrichtung eine Split-Einrichtung mit getrennten Außen- und Innenteilen (A, I) ist.

4. Temperiereinrichtung mit einem Kältemedium-Kreislauf, in dem in Reihenschaltung ein Verdichter (1), ein zur Wärmeabgabe bestimmter Kondensator (3), ein Expansionsventil (4) und ein zur Wärmeaufnahme bestimmter Verdampfer (5) angeordnet sind, insbesondere nach einem der Ansprüche 1 bis 3,
**dadurch gekennzeichnet, dass** der Kondensator (3) durch eine von seinem Ausgang (18) bis zu seinem Eingang (15) verlaufende, ein nur von diesem Ausgang zu diesem Eingang eine Strömung durchlassende Rückspeisungsleitung (81) überbrückt ist, die in die Eingangsleitung (15) des Kondensators mündet, die am Zusammenfluss als Saugrohr ausgebildet ist.

5. Temperiereinrichtung nach Anspruch 4, **dadurch gekennzeichnet, dass** das Kältemedium des Kältemediumkreislaufs ein Mehrkomponenten-Kältemedium ist.

6. Temperiereinrichtung nach Anspruch 5, **dadurch gekennzeichnet, dass** das Kältemedium ein halogenisierter Fluorkohlenwasserstoff "HFKW" ist.

7. Temperiereinrichtung nach Anspruch 6, **dadurch gekennzeichnet, dass** das Kältemedium ein unter der Bezeichnung R-407C im Handel befindliches Mittel ist.

8. Temperiereinrichtung mit einem Kältemedium-Kreislauf, in dem in Reihenschaltung ein Verdichter (1), ein zur Wärmeabgabe bestimmter Kondensator (3), ein Expansionsventil (4) und ein zur Wärmeaufnahme bestimmter und mit einem Gebläse (6) zum Hindurchblasen von einem Wärmeentzug zu unterwerfender Luft versehener Verdampfer (5) angeordnet sind, insbesondere nach einem der Ansprüche 1 bis 7, **dadurch gekennzeichnet, dass** der Kältemedium-Kreislauf einen zusätzlichen Wärmetauscher (25) umfasst, der zum Zweck der Wärmeabgabe in den Kältemedium-Strom zwischen dem Ausgang des Kondensators (3) und dem Eingang des Verdampfers (5) eingeschaltet ist und örtlich im Weg des vom Gebläse (6) erzeugten Luftstroms vor dem Verdampfer (5) angeordnet ist.

9. Temperiereinrichtung mit einem Kältemedium-Kreislauf, in dem in Reihenschaltung ein Verdichter (1), ein zur Wärmeabgabe bestimmter Kondensator (3), ein Expansionsventil (4) und ein zur Wärmeaufnahme bestimmter und mit einem Gebläse (6) zum Hindurchblasen von einem Wärmeentzug zu unterwerfender Luft versehener Verdampfer (5) angeordnet sind, insbesondere nach einem der Ansprüche 1 bis 8, **dadurch gekennzeichnet, dass** der Kältemedium-Kreislauf einen zusätzlichen Wärmetauscher (2) umfasst, der zum Zweck der Wärmeabgabe in den Kältemedium-Strom zwischen dem Ausgang des Verdichters (1) und einem vor dem Eingang des Kondensators (3) eingeschalteten, den Kondensator im Abtaubetrieb vom Verdichterausgang trennenden Kreislaufumkehrventil (14) so eingesetzt ist, dass er in beiden Kreislaufrichtungen in den Kältemedium-Kreislauf einbezogen ist.

10. Temperiereinrichtung nach Anspruch 9, **dadurch gekennzeichnet, dass** der zusätzliche Wärmetauscher (2) durch eine von seinem Ausgang (18) bis zu seinem Eingang (15) verlaufende, ein nur von diesem Ausgang zu diesem Eingang eine Strömung durchlassende Rückspeisungsleitung (81) überbrückt ist, die in die Eingangsleitung (11) dieses Wärmetauschers mündet, die am Zusammenfluss als Saugrohr ausgebildet ist (Fig. 6).

11. Temperiereinrichtung nach Anspruch 9 oder 10, **dadurch gekennzeichnet, dass** eine ein Schaltventil (88) enthaltende Überbrückungsleitung (87) vom Eingang des zusätzlichen Wärmetauschers (2) bis zur im Abtaubetrieb den Verdampfer speisenden (5) speisenden Leitung (16) verläuft und somit den zusätzlichen Wärmetauscher (2) und das auf diese Leitung gestellte Kreislaufumkehrventil (14) überbrückt.

12. Temperiereinrichtung nach einem der Ansprüche 8 bis 11, **dadurch gekennzeichnet, dass** einerseits der zusätzliche Wärmetauscher (25) und der Verdampfer (5), bzw. andererseits der zusätzliche Wärmetauscher (2) und der Kondensator (3) in Aneinanderlage in einem gemeinsamen Gehäuse angeordnet sind.

13. Temperiereinrichtung mit einem Kältemedium-Kreislauf, in dem in Reihenschaltung ein Verdichter (1), ein zur Wärmeabgabe bestimmter Kondensator (3), ein Expansionsventil (4) und ein zur Wärmeaufnahme bestimmter und mit einem Gebläse (6) zum Hindurchblasen von einem Wärmeentzug zu unterwerfender Luft versehener Verdampfer (5) angeordnet sind, mit einem in die Ausgangsleitung des Verdichters eingeschalteten Ölabscheider und einer von einer Ölsammelstelle im Ölabscheider (12) abzweigenden Öl-Rückführleitung (13) zum Verdichter, insbesondere nach einem der Ansprüche 1 bis 12,
**dadurch gekennzeichnet, dass** in die Öl-Rückführleitung der wärmeentziehende Teil eines Wärmetauschers (103) eingeschaltet ist, dessen wärmeabgebender Teil örtlich direkt oder indirekt im Weg des vom Gebläse (6) des Verdampfers (5) erzeugten Luftstroms vor dem Verdampfer angeordnet ist.

14. Temperiereinrichtung nach Anspruch 13, **dadurch gekennzeichnet, dass** der mit seinem wärmeentziehenden Teil in die Öl-Rückführleitung (13) eingeschaltete Wärmetauscher (103) eine zweite Expansionseinrichtung (104,105) speist und der diese Teile enthaltende Zweig des Kältemedium-Kreislaufs einen zusätzlichen Verdampfer (101) enthält.

15. Temperiereinrichtung mit einem Kältemedium-Kreislauf, in dem in Reihenschaltung ein Verdichter (1), ein zur Wärmeabgabe bestimmter Kondensator (3), ein Expansionsventil (4) und ein zur Wärmeaufnahme bestimmter und mit einem Gebläse (6) zum Hindurchblasen von einem Wärmeentzug zu unterwerfender Luft versehener Verdampfer (5) angeordnet sind, insbesondere nach einem der Ansprüche 1 bis 14, **dadurch gekennzeichnet, dass** zwischen dem Expansionsventil (4) und dem Verdampfer (5) eine Leitungsverzweigung in eine Mehrzahl von in Einspritzdüsen in den Verdampfer endenden Leitungen vorliegt und sowohl von einem Punkt zwischen dem Expansionsventil und der Leitungsverzweigung, als auch vom Volumen des Verdampfers (5) je eine Kondensatabführleitung in Richtung zum Kondensator (3) abzweigt, die jeweils ein in der Richtung zum Kondensator öffnendes Rückschlagventil (41,42) enthalten.

16. Temperiereinrichtung nach Anspruch 15, **dadurch gekennzeichnet, dass** sich die beiden Kondensatabführleitungen in Strömungsrichtung hinter den Rückschlagventilen (41,42) vereinigen und von der zum Kondensator (3) gerichteten vereinigten Leitung (19) noch vor Erreichen des Kondensators eine Abführleitung (79) zu einem Kältemedium-Vorratstank (53) abzweigt.
